(19) Europäisches Patentamt
European Patent Office
Office européen des brevets

(11) Publication number: **0 030 039**
**B1**

(12) **EUROPEAN PATENT SPECIFICATION**

(45) Date of publication of patent specification: **05.10.83**

(51) Int. Cl.³: **C 07 C 125/06,**
C 08 G 18/80

(21) Application number: **80107578.9**

(22) Date of filing: **04.12.80**

(54) **Process for the preparation of polymethylene polyphenyl polyisocyanate composition and use thereof.**

(30) Priority: **04.12.79 JP 156353/79**
**05.12.79 JP 156919/79**
**06.12.79 JP 157421/79**

(43) Date of publication of application:
**10.06.81 Bulletin 81/23**

(45) Publication of the grant of the patent:
**05.10.83 Bulletin 83/40**

(84) Designated Contracting States:
**DE FR GB NL**

(56) References cited:
EP - A - 0 019 375
FR - A - 2 343 769
GB - A - 1 056 230

(73) Proprietor: **MITSUI TOATSU CHEMICALS, INCORPORATED**
**2-5 Kasumigaseki 3-chome**
**Chiyoda-Ku Tokyo 100 (JP)**

(72) Inventor: **Takeuchi, Kouichi**
**1541, Yabecho Totsuka-ku**
**Yokohama Kanagawa-ken (JP)**
Inventor: **Hasegawa, Seiji**
**1541, Yabecho Totsuka-ku**
**Yokohama Kanagawa-ken (JP)**
Inventor: **Aoki, Shinobu**
**1612, Kosugayacho Totsuka-ku**
**Yokohama Kanagawa-ken (JP)**
Inventor: **Miyata, Katsuharu**
**1071-2, Nakanocho Totsuka-ku**
**Yokohama Kanagawa-ken (JP)**
Inventor: **Iwasaki, Masao**
**2070, Iijimacho Totsuka-ku**
**Yokohama Kanagawa-ken (JP)**
Inventor: **Muraishi, Teruo**
**15-16, Honhaneda 3-chome Ohta-ku**
**Tokyo (JP)**

(74) Representative: **Zumstein, Fritz jun., Dr. et al,**
**Dr. F. Zumstein sen. Dr. E. Assmann Dr. R. Koenigsberger Dipl.-Ing. F. Klingseisen Dr. F. Zumstein jun. Bräuhausstrasse 4**
**D-8000 München 2 (DE)**

**EP 0 030 039 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for the preparation of polymethylene polyphenyl polyisocyanate composition and use thereof

This invention relates to a process for the preparation of a polymethylene polyphenyl polyisocyanate composition containing up to 10 per cent by mole of an alkoxycarbonylamino group (hereinafter referred to as a carbamate group) based on the amounts of the isocyanate groups in the composition.

A methylene crosslinked polyphenyl isocyanate reacts with polyfunctional hydrogen compounds such as polyesters, polyester amides, and polyethers to form rigid polyurethane substances. This reaction can be conducted in the presence of a blowing agent to obtain a foam product. The polyurethane foam thus obtained is generally called a rigid foam, and has a closed-cell structure with excellent heat insulating properties, heat resistance, weatherability, and chemical resistance, so that it has various uses, for example, heat insulating materials for use in a refrigerator, a house, and the like; lagging materials for use in oil tanks, chemical plants, and the like; and the like. Recently, however, there has been raised a demand for the weight saving of the foam from the standpoint of the saving of energy and resources.

However, a reduction of a foam density for the weight saving of the rigid polyurethane foam causes to lower a compressive strength, a degree of closed-cell, and a dimensional stability. The reduction of the density can readily be performed by increasing the amount of the blowing agent, but it causes to lower the compressive strength. Accordingly, attempts have been made to increase the compressive strength by use of sugar base polyethers or sugar amine base polyethers as the polyol, but the dimensional stability at lower temperatures is lowered to be unsatisfactory for use in refrigerators, and the like due to the drawback as above. Further, an improvement by selecting a catalyst to regulate the polymerization rate and expansion rate has been proposed with unsatisfactory results.

An object of this invention is to provide a process for the preparation of a polyisocyanate composition which is useful for the preparation of a low density rigid polyurethane foam with a high compressive strength, an excellent dimensional stability at lower temperatures, and a high degree of closed-cell.

The polyisocyanate composition prepared by the present invention comprises polymethylene polyphenyl polyisocyanates, at least a part of the isocyanate groups of which is substituted by the carbamate group, and is such that the amount of the carbamate group in the composition is up to 10 per cent by mole based on the isocyanate group in the composition. The polyisocyanate composition obtained by the present invention is further explained to be such a polymethylene polyphenyl polyisocyanate composition that up to 10% by mole of —NCO group contained in polymethylene polyphenyl polyisocyanates represented by the general formula (I)

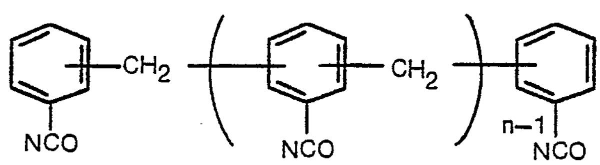

(I)

where n is an integer of one or more, preferably from 1 to 6, is substitued by a carbamate group represented by the formula $—NHCO_2R$ where R is a lower alkyl group having 1 to 4 carbon atoms.

The ratio of $NHCO_2R$ group to NCO group is not always defined with respect to an individual compound in the mixture, but may be defined as a ratio in the mixture as a whole.

The total carbamate groups contained in the aforesaid composition are to be up to 10% by mole based on the total isocyanate groups, the lower limit being preferably 0.1% by mole. A especially preferable carbamate group content is in the range of from 0.5 to 8% by mole based on the isocyanate group.

The aforesaid composition is prepared by a process, in which polymethylene polyphenyl polycarbamates represented by the general formula (II)

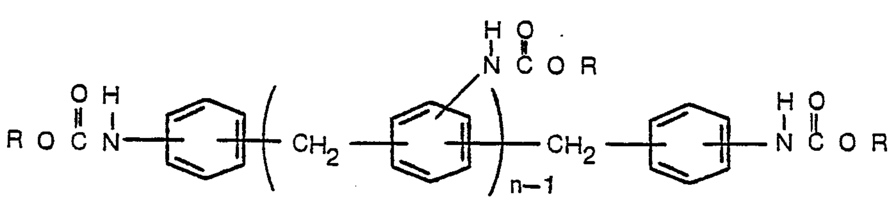

(II)

where R represents a lower alkyl group having 1 to 4 carbon atoms, and n represents an integer of one or more, preferably from 1 to 6 are thermally decomposed under specified conditions.

EP 0 019 375 already discloses a crude MDI which has been reacted with cetyl alcohol according the ratio 90% by weight of crude MDI — 10% by weight of cetyl alcohol.

GB—1 056 230 discloses arylpolyalkylene polyisocyanate and especially the polymethylene-polyphenylpolyisocyanate having 2 to 20% and especially between 2,9 and 9,6% of isocyanate groups reacted with a monohydric alcohol having 2 to 20 carbon atoms.

FR—A—2343 769 discloses an MDI which has been reacted with 0,005 to 0,05 equivalents of an aliphatic monoalcohol such as n-butanol.

None of the above references, however, is concerned with the process of the present invention.

Polymethylene polyphenyl polyisocyanates represented by the general formula (I) are industrially prepared by condensing aniline with formaldehyde in the presence of a catalyst, for example, a strong acid such as hydrochloric acid followed by phosgenization of a condensed amine compound thus obtained. The condensed amine compound can be obtained so as to be composed of diamine and higher polyvalent polyamine in an arbitrary composition by regulating aniline/formaldehyde ratio and/or aniline/acid ratio. Consequently, polymethylene polyphenyl polyisocyanates prepared by phosgenization of a condensed amine product are obtained so as to be composed of diisocyanate, triisocyanate, higher polyfunctional polyisocyanates, and the like with a corresponding composition to that of the condensed amine product. Thus, various kinds of polymethylene polyphenyl polyisocyanates with different kinds of compositions composed of diisocyanate, triisocyanate, and higher polyfunctional polyisocyanates have been prepared.

As a proportion of diisocyanate in the polyisocyanate is decreased, an increase in viscosity is caused, and it has an adverse effect on the formation of a rigid foam. Thus, a content of methylene diphenyl monocarbamate monoisocyanate, represented by the general formula (III)

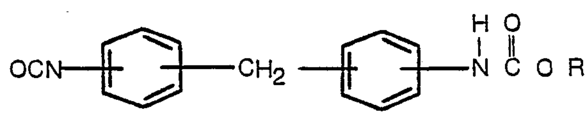

(III)

where R represents a lower alkyl group, is preferably in the range of up to 8%, especially up to 5%.

The carbamate group containing modified polyisocyanate composition obtained by the invention has no disadvantages for the preparation of rigid urethane foam except that the isocyanate content therein is lowered to some extent compared with polymethylene polyphenyl polyisocyanate. That is, polyisocyanate thus obtained may be allowed to react directly with polyether, polyester, or other polyols in the presence of a blowing agent, a foam stabilizer, and a catalyst to obtain a foam, or may be mixed with other isocyanates to prepare a rigid foam.

In the process of the invention a mixture of polymethylene polyphenyl polycarbamic acid esters, which are obtained by the condensation reaction of N-phenyl carbamic acid alkyl ester represented by the general formula (IV)

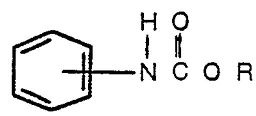

(IV)

where R represents an alkyl group having 1 to 4 carbon atoms with formaldehyde or a formaldehyde-producing compound and are represented by the general formula (II), are thermally decomposed under such specified conditions that the carbamate groups partly remain unchanged to obtain the polymethylene polyphenyl polyisocyanate composition. According to the above-mentioned condensation N-phenyl carbamic acid ester and formaldehyde or a formaldehyde-producing compound are subjected to condensation reaction in the presence of an acid catalyst.

Examples of the N-phenyl carbamic acid esters include N-phenyl carbamic acid methyl ester, N-phenyl carbamic acid ethyl ester, N-phenyl carbamic acid n-propyl ester, N-phenyl carbamic acid isopropyl ester, N-phenyl carbamic acid n-butyl ester, N-phenyl carbamic acid iso-butyl ester, N-phenyl carabamic acid iso-butyl ester, N-phenyl carbamic acid, tert-butyl ester, and the like.

In addition to formaldehyde, formaldehyde-producing compounds such as paraformaldehyde, trioxane, methylal, and other formals may be used instead thereof. The amount of formaldehyde or formaldehyde-producing compounds is in the range of from 0.1 to 10 moles, preferably 0.2 to 2.0 moles thereof as formaldehyde per mole of N-phenyl carbamic acid ester as a raw material.

Examples of the acid used in the above mentioned condensation include a mineral acid such as hydrochloric acid, sulfuric acid, phosphoric acid, and boric acid; and an organic acid such as formic acid, acetic acid, oxalic acid, and toluenesulfonic acid. The so-called super acids such as hydrobromic acid, perchloric acid, chlorosulfonic acid, methanesulfonic acid are also effective to be used.

Examples of other effective acids include ion exchange resins containing an acid group such as carboxyl group and sulfonic group; and an acid called Lewis acid such as boron trifluoride, iron chloride, aluminium chloride, zinc chloride, and titanium chloride.

In the case of a protonic acid such as the mineral acid, the organic acid, or the super acid as above, the amount of the acid is in the range of from 0.001 to 10 moles, preferably 0.01 to 4 moles per mole of N-phenyl carbamic acid ester as the raw material. In the case where these acids are used as an aqueous solution, the acids are desirably used in a concentration of from 10 to 95% by weight, preferably 20 to 80% by weight based on the amount of water in the reaction system. If the concentration is less than 10% by weight, the reaction rate becomes so low that the aforesaid process is substantially unavailable as an industrial process. If the concentration is higher than 95% by weight, an unfavorable side reaction such as hydrolysis of the raw material takes place.

The condensation reaction is carried out by heating with an acid catalyst in the absence of a solvent or in the presence of a suitable solvent. Examples of the suitable solvent include aliphatic hydrocarbons such as hexane, and heptane; alicyclic hydrocarbons such as cyclopentane, cycylohexane, and methylcyclohexane; aromatic hydrocarbons such as benzene, toluene, and xylene; alkyl, halogen, and nitro-substituted compounds thereof; halogenated hydrocarbons such as chloroform, methylene dichloride, carbon tetrachloride, dichloroethane, trichloroethane, and tetrachloroethane; fatty acid alkyl esters such as ethyl acetate; ethers such as diethyl ether, di-isopropyl ether, dioxane, and tetrahydrofuran; and the like. The amount of solvents used is in a ratio by weight of 0.1 to 100, preferably 0.2 to 50 to the amount of N-phenyl carbamic acid ester as a raw material.

The reaction temperature is generally in the range of from 10 to 150°C, preferably 20 to 120°C. At higher temperatures, unfavorable side reactions such as hydrolysis take place. The reaction time is varied depending on reaction procedures and reaction conditions, but it is usually in the range of from one minute to 10 hours.

Polycarbamic acid esters thus obtained are composed of binuclear compounds, trinuclear compounds, and higher polynuclear compounds. The ratio thereof in composition can be varied by a molar ratio of N-phenyl carbamic acid ester to formaldehyde, kind of the catalyst, and other reaction conditions.

The ratio in composition among these polynuclear compounds for the polycarbamic acid esters approximately correspond to that for polyisocyanates obtained by thermal decomposition, so that it is favorable to select such a ratio in the composition among these polynuclear compounds that an isocyanate content and viscosity are not affected greatly by the amount of a compound having alkoxycarbonylamino group remaining in the final product, and that an excellent foam is formed. Thus, a dicarbamate content in polycarbamic acid esters is in the range of from 40 to 80% by weight, preferably 50 to 70% by weight.

The reaction product obtained by condensation reaction is subjected to thermal decomposition reaction after the removal of catalyst and solvent. The condensation reaction product contains unreacted N-carbamic acid esters depending on condensation reaction conditions, and the unreacted N-carbamic acid esters can be removed from the condensation product by the conventional separating methods such as distillation, extraction, or the like. The condensation production containing unreacted N-phenyl carbamic acid esters may be subjected directly to thermal decomposition with rather prepared results.

The thermal decomposition of polycarbamic acid esters can be effected either by a process in which the reaction is carried out at high temperatures for a short period of time, or by a process in which the reaction is carried out by use of an inert solvent at relatively lower temperatures, in both processes compounds having an alkoxycarbonyl group may be contained therein.

The content of unreacted N-carbamic acid esters is not controlled by thermal decomposition is normally up to 50% by weight, preferably up to 20% by weight, because a higher content causes an increase in unnecessary service expenditures and a largification of the plant.

N-phenyl carbamic acid esters are decomposed to form N-phenyl isocyanates by the aforesaid reaction. The N-phenyl isocyanates are taken out of the system as vapor without using any other carriers either to be recovered as useful N-phenyl isocyanates by partial condensation from alcohol, or to be condensed with alcohol for the subsequent reaction to form N-phenyl carbamic acid esters, which may be recovered as a raw material.

The thermal decomposition reaction is normally carried out in an organic solvent. The organic solvent used is such an inert solvent that it can dissolve polycarbamic acid esters and polyisocyanates at room temperature, at least at the reaction temperature. However, such a solvent that its boiling point is too high is unfavorable in that removal of solvent is difficult to cause retrogradation of isocyanate group and pollution of the polyisocyanate product with resulting reduction in its commercial value. The solvent is preferably removed by distillation after completion of thermal decomposition reaction, so that it preferably has a boiling point up to 300°C under atmospheric pressure. If an inert solvent has a boiling point higher than 300°C, the inert solvent should preferably be such a solvent that it can form an azeotropic point up to 300°C under atmospheric pressure with other solvent as a third component. The solvent as the third component may also be used with an inert solvent having a boiling point up to 300°C in order to lower the boiling point of the inert solvent.

Straight-chain or branched-chain aliphatic hydrocarbons, or lower akyl benzenes are unfavorable because the solubility of raw materials is poor. Examples of preferable inert solvents include aromatic hydrocarbons such as substituted benzenes and substituted naphthalenes, for example, nitro or halogen

compounds, which are unreactive with isocyanate and include chlorobenzene, nitrobenzene, chloronaphthalene, and the like; diphenyls, diphenyl methanes, and terphenyls; aromatic ethers such as diphenyl ether, and diphenyl thioether; esters such as dibutyl phthalate, and dioctyl phthalate; and the like. The concentration of the raw material in the solvent is in the range of from 1 to 30% by weight, preferably 5 to 20% by weight in order to suppress side reactions such as a reaction between isocyanates thus formed, a reaction of isocyanates with the raw material, and the like.

The thermal decomposition reaction may be carried out in the absence of a catalyst, but is usually carried out in the presence of a trace amount of catalyst. Preferable catalysts used in the process of the present invention include zinc, aluminium, and compounds thereof, and these catalysts are used as metallic compounds which are readily soluble in the inert solvent for use in the thermal decomposition reaction, for example, as halides of zinc and aluminium, salts of organic carboxylic acid, a complex thereof with an organic ligand such as acetyl acetone, and the like. Preferable examples of these catalysts include zinc chloride, aluminium chloride, zinc acetate, zinc naphthenate, zinc acetyl acetone, and the like.

The amount of catalyst is in the range of from 5 to 100 ppm, preferably 40 to 90 ppm as metal based on the raw material. A higher content causes retrogradation of isocyanate group.

The reaction temperature for the thermal decomposition reaction is preferably in the range of from 200 to 350°C, and at a temperature lower than 200°C the thermal decomposition rate becomes so low that allophanate linkages are increased, and at 350°C or higher an increase of polymers due to side reactions are developed.

The reaction pressure is determined by kind of the solvent used, but is up to 10 kg/cm$^2$G, preferably atmospheric pressure or lower, and the reaction needs to be effected with violent boiling of the solvent under a boiling pressure of the solvent.

In the preparation of the composition of the present invention, the thermal decomposition reaction must be stopped halfway so that alkoxycarbonylamino group of polycarbamic acid esters may remain in an amount of 10% by mole based on isocyanate group. This control of reaction can be attained by catching the amount of alcohol distilled off or by determining a relationship between degree of conversion of methylene bis (phenyl carbamate) (MDC), rate of change of methylene monocarbamate monoisocyanate (MIC), or rate of formation of methylene bis (phenyl isocyanate) (MDI) and the reaction time for stopping the reaction aiming at the reaction time, or for determining the residence time for a continuous process. The reaction time is varied depending on the amount of inert solvent distilled out of the reaction system, the kind and amount of the catalyst used, and the like besides the reaction temperature and reaction pressure, normally ranging from 30 minutes to 6 hours. After completion of decomposition reaction, the solvent is removed to obtain polyisocyanates. Removal of the solvent is preferably effected immediately after the completion of the thermal decomposition. The temperature for distilling off the solvent is preferred to be as low as possible. At higher temperatures, the retrograduation of polyisocyanates thus formed, especially binuclear compounds takes place remarkably. In the industrial process, the removal of solvent can readily be effected by flashing procedure. The solvent can be distilled off at higher temperatures in a short period of time to distill off completely the solvent.

The thermal decomposition reaction in the process of the present invention may be effected in any methods as long as the respective reaction conditions are satisfied. However, the simplest and the most economical method is such a method that the reaction is effected in a reactor fitted with a reflux tower while refluxing the inert solvent to remove alcohol.

The polyisocyanate composition thus obtained by the present invention is mainly composed of a methylene crosslinked polyphenyl isocyanate mixture represented by the general formula (I) and compounds having carbamate group, or of a so-called urethane type structure are contained therein. Examples of the compounds having carbamate group include methylene monocarbamate monoisocyanate, 2,4-bis(p-carbamate benzyl) phenyl isocyanate, 2,4-bis(p-isocyanate benzyl)phenyl carbamate, 2-(p-isocyanate benzyl)-4-(p-carbamate benzyl)phenyl isocyanate, 2-(p-carbamate benzyl)-4-(p-isocyanate benzyl)phenyl isocyanate, 2-(p-isocyanate benzyl)-2-(p-carbamate benzyl)phenyl carbamate, 2-(p-carbamate benzyl)-4-(p-isocyanate benzyl)phenyl carbamate, and the like, and further include such compounds as precursors of polyvalent polyisocyanates partly remaining carbamate groups.

That is, the composition obtained by the present invention contains binuclear compounds in the case where n=1 in the general formula (I) in an amount of from 30 to 80% by weight, in which isocyanate compounds partly having carbamate group are contained. The carbamate group containing isocyanate compounds in the composition are contained therein in such an amount that the carbamate groups are up to 10% by mole based on the isocyanate groups. The composition may contain a small amount of biuret, isocyanate dimer, isocyanurate, and compounds having a urea type structure. Generally, decrease in isocyanate group content in polyisocyanates has a tendency to increase viscosity. In the preparation of rigid urethane foam by mixing polyol therewith, a low isocyanate content causes to increase the amount of polyisocyanate to be used to be uneconomical, and a higher viscosity causes a poor mixed state with polyol and other materials such as foam stabilizer, blowing agent, and catalyst, so that no favorable foam is obtained.

However, according to the polyisocyanate composition obtained by the present invention, which contains polyisocyanates having partly carbamate groups, a decrease in isocyanate group content causes no decrease in viscosity because carbamate groups remain. The rigid urethane foam prepared by use of the composition obtained by the present invention has excellent properties especially at a low density, and is a high quality foam having such characteristics as not to be obtained by the conventional methylene cross-linked polyphenyl polyisocyanates.

That is, the rigid urethane foam prepared by use of the polyisocyanate composition obtained by the present invention has invariably higher compressive strength compared with the rigid urethane foam having an identical density and prepared by use of the conventional polyisocyanate composition. A degree of closed-cell of the urethane foam prepared by use of the conventional polyisocyanate composition is abruptly lowered at lower densities, but that of the urethane foam prepared by use of the isocyanate composition obtained by the present invention is kept at an approximately constant level without any abrupt lowering thereof. With respect to a dimensional stability at low temperatures, it is impossible to obtain a good dimensional stability for an urethane foam having a density lower than 28 kg/m$^3$ and prepared by use of the conventional isocyanate composition because marked shrinkage occurs. The use of the polyisocyanate composition obtained by the present invention makes it possible to obtain a low density foam having a density as low as 25 kg/m$^3$, showing that a weight saving by nearly 10% has been made. A decrease of isocyanate group content due to conversion of isocyanate group to carbamate group results in no change in density and a good foaming efficiency.

A modified polymethylene polyphenyl polyisocyanate composition obtained according to the present invention is a brown liquid at room temperature, and has an isocyanate content of 25 to 32% by weight and a viscosity of up to 500 cp (20°C).

The present invention will be illustrated in detail by the following examples, where not otherwise indicated, the percentages are by weight. Physical and chemical properties of isocyanate and foam are measured according to the following methods.

| | |
|---|---|
| Isocyanate content | ASTM D 1638—61T |
| Density | ASTM D 1622—63 |
| Compressive strength | ASTM D 1621 |
| Degree of closed-cell | Air Comparison Type Gravimeter (corresponding to ASTM D 2856) |
| Dimensional stability | ASTM D 2342<br>ASTM D 2126 |

The measurement of the content of methylene diphenyl monocarbamate monoisocyanate is carried out by high speed liquid chromatography, and the ratio

$$\frac{-\overset{H}{\overset{|}{N}}COOR}{-NCO}$$ of carbamate group $-\overset{H}{\overset{|}{N}}COOR$ to isocyanate group

$-NCO$ is determined by infrared absorption spectrum.

The raw materials used for the preparation of rigid foam are shown below:

| | |
|---|---|
| Polyol | Sugar amine-based polyether having a hydroxyl value of about 470 and a viscosity of 1800 cp at 25° ("PPG—NT—470" of Mitsui Nisso Corporation) |
| Blowing agent (A) | water |
| Blowing agent (B) | Trichlorofluoromethane ("F—11A" of Mitsui Fluoro Chemicals INC.) |
| Foam stabilizer | Polyalkylene siloxane ("Silicone F—341" of Shin-Etsu Chemical Co., Ltd.) |
| Catalyst | Tetramethylene hexamethylene-diamine (referred to as TMHMD) |

Fig. 1 shows a relationship between density and compressive strength for an urethane foam, Fig. 2 shows a relationship between density and degree of closed-cell for an urethane foam, and Fig. 3 shows a relationship between density and dimensional stability for an urethane foam. In Fig. 1, the compressive strength by use of the polyisocyanate composition obtained by the invention is 2.3 kg/m and that by use of the conventional polymethylene polyphenyl polyisocyanate composition is 2.1 kg/m$^3$ when the density is 29 kg/m$^3$, and consequently a ratio of compressive strength to density is 0.079 and 0.072 respectively, showing an increase by about 9%. In Fig. 2, the degree of closed-cell of the conventional polymethylene polyphenyl polyisocyanate composition is abruptly lowered at lower densities, but that for the isocyanate obtained by the present invention is shown to be approximately constant. In Fig. 3, with respect to the dimensional stability at lower temperatures, it is impossible for the foam prepared by use of the conventional composition to obtain a foam having a density lower than 28 kg/m$^3$ with a good dimensional stability due to its marked shrinkage, but with the composition obtained by the present invention, a low density foam having a density of as low as 25 kg/m$^3$ can be sufficiently available with a satisfactory dimensional stability, resulting in a weight saving by nearly 10%.

Example 1

To a 6 l flask 1000 g of N-phenyl ethyl carbamate, 90 g of paraformaldehyde, 420 g of boron trifluoride ethylate [$BF_3(C_2H_5)O$] as a catalyst and 3000 cc of benzene as a solvent are charged and the resulting mixture is subjected to condensation reaction with agitation in a nitrogen stream. The reaction temperature is 80°C, and the reaction time is 5 hours. After the completion of the condensation reaction, the resulting reaction mixture is washed with water to remove the catalyst, benzene is distilled off with a rotary evaporation, and unreacted N-phenyl ethyl carbamate is mostly removed by distillation under reduced pressure. A composition of polycarbamic acid ethyl esters thus obtained is as follows:

| | Content (%) |
|---|---|
| Unreacted N-phenyl carbamate | 5.0 |
| Binuclear compounds (MDC) | 50.8 |
| Trinuclear compounds | 24.7 |
| Other higher polycarbamates | 19.5 |

To a 6 l flask fitted with a reflux condenser 200 g of the condensation product obtained as above, 4000 g of diphenyl ether as an inert organic solvent, and 16 mg of zinc chloride as a catalyst are charged, and the resulting mixture is subjected to thermal decomposition at a reaction temperature of 253°C. Heating by use of a mantle heater, the reaction is carried out in such a manner that the inert organic solvent is invariably kept at its boiling state regulating the pressure in the range of from 700 to 720 mmHg, and that the alcohol thus formed is discharged as vapor at the top of the condenser along with a part of the solvent. The reaction is stopped in 60 minutes after the temperature of the reaction mixture reaches the reaction temperature of 253°C and boiling thereof starts, and then the removal of solvent is effected. For the complete removal of the solvent, the mixture is transferred to a distilling

flask to remove the solvent at 140°C under a reduced pressure of 1 mmHg. The composition of the polyisocyanates thus obtained is shown below. Unreacted N-phenyl carbamate is recovered from alcohol distillate in an yield of 98%. It is considered that N-phenyl isocyanate discharged is recombined with alcohol.

| | Content (%) |
|---|---|
| Binuclear compound (MDI) | 42.3 |
| MIC (binuclear compound containing alkoxycarbonyl group) | 8.2 |
| Trinuclear compound | 23.0 |
| Trinuclear compound containing alkoxycarbonyl group | 0.4 |
| Other higher isocyanates | 26.1 |

The isocyanate content therein is 26.8%. The Polyisocyanate composition thus obtained is mixed with polyol by use of the following composition:

| | (g) |
|---|---|
| Polyol | 100 |
| Blowing Agent (A) | 1.0 |
| Blowing Agent (B) | 45.7 |
| Foam stabilizer | 1.5 |
| Catalyst | 1.5 |
| Polyisocyanate composition obtained | 156.1 |

The mixing time is about 10 seconds, and the rate of stirring is 100 RPM. The resulting mixture is injected into a mold to form a foam.

Example 2

Procedures of Example 1 are repeated except that the thermal decomposition reaction is carried out by use of a part of the condensation product prepared in Example 1 with a decomposition time of 60 minutes to obtain polyisocyanates. The composition of the polyisocyanates thus obtained is shown below:

| | Content (%) |
|---|---|
| Binuclear compound (MDI) | 44.8 |
| MIC | 5.4 |
| Trinuclear compound | 22.4 |
| Other higher isocyanates | 27.4 |

The trinuclear compound having alkoxycarbonyl group is obtained in trace amounts. An isocyanate content therein is 27.4%. The polyisocyanate composition is mixed with polyol by use of the following composition:

| | (g) |
|---|---|
| Polyol | 100 |
| Blowing Agent (A) | 1.0 |
| Blowing Agent (B) | 45.1 |
| Foam stabilizer | 1.5 |
| Catalyst | 1.5 |
| Polyisocyanate composition obtained | 152.7 |

A foam is formed by mixing at a rate of stirring of 1000 RPM for about 10 seconds. The resulting mixture is injected into a mold to form a foam.

Example 3

Procedures of Example 1 are repeated except that the decomposition time is 2 hours to obtain polyisocyanates. The composition thereof is shown below:

| | Content (%) |
|---|---|
| Binuclear compound (MDI) | 47.5 |
| MIC | 2.1 |
| Trinuclear compound | 22.6 |
| Other higher isocyanates | 27.8 |

Trinuclear compounds containing alkoxycarbonyl group are obtained in trace amounts. An isocyanate content therein is 28.8%. The polyisocyanate composition is mixed with polyol by use of the following composition:

| | (g) |
|---|---|
| Polyol | 100 |
| Blowing agent (A) | 1.0 |
| Blowing agent (B) | 43.8 |
| Foam stabilizer | 1.5 |
| Catalyst | 1.5 |
| Polyisocyanate composition obtained | 145.3 |

A foam is formed in the same manner as in Example 2.

Comparative Example 1

Procedures of Example 1 are repeated except that the decomposition time is 3 hours to obtain polyisocyanates. The composition thereof is shown below:

| | Content (%) |
|---|---|
| Binuclear compound | 48.7 |
| Trinuclear compound | 21.9 |
| Other higher isocyanates | 29.4 |

No MIC is detected. No trinuclear compound containing alkoxycarbonylamino group is detected. An isocyanate content therein is 29.1%. The composition thus obtained is mixed with polyol by use of the following composition:

| | (g) |
|---|---|
| Polyol | 100 |
| Blowing Agent (A) | 1.0 |
| Blowing Agent (B) | 43.5 |
| Foam stabilizer | 1.5 |
| Catalyst | 1.5 |
| Polyisocyanate composition obtained | 143.7 |

Densities and physical properties of the foams obtained in Examples 1 to 3, and comparative Example 1 are shown in Table 1.

TABLE 1

| | Example 1 | Example 2 | Example 3 | Comparative Example 1 |
|---|---|---|---|---|
| Density (kg/m³) | 25.2 | 24.9 | 24.6 | 25.3 |
| Physical properties<br>Compressive strength (Kg/cm²)<br>(II)<br>(⊥) | <br><br>1.82<br>0.72 | <br><br>1.80<br>0.70 | <br><br>1.79<br>0.69 | <br><br>1.61<br>0.66 |
| Degree of closed-cell (%) | 87.5 | 86.6 | 85.6 | 83.5 |
| Dimensional stability (%)<br>(24 hrs. at 110°C)<br>(II)<br>(⊥) | −2.0 | −1.8 | −2.3 | −3.0 |
| (72 hrs. at −30°C)<br>(II)<br>(⊥) | <br>−0.4<br>−0.8 | <br>−0.3<br>−1.1 | <br>−0.2<br>−1.5 | <br>−0.4<br>−8.5 |

Note: In Table 1, the mark (II) shows the case parallel to the direction of expansion, and the mark (⊥) shows the case perpendicular to the direction of expansion.

Example 4

To a large-size 10 l flask 2000 g of N-phenyl ethyl carbamate, 144 g of paraformaldehyde, 880 g of $BF_3(C_2H_5)O$ as a catalyst, and 600 cc of benzene as a solvent are charged, and the resulting mixture is subjected to condensation reaction with agitation in a nitrogen stream. The reaction temperature is 80°C, and the reaction time is 5 hours. Thereafter, polycarbamic acid ethyl ester is obtained in the same manner as in Example 1. The composition thereof is shown below:

| | Content (%) |
|---|---|
| Unreacted N-phenyl carbamate | 3.8 |
| Binuclear compound (MDC) | 57.8 |
| Trinuclear compound | 20.5 |
| Other higher polycarbamates | 17.9 |

To a 6 l flask fitted with a reflux condenser 200 g of the condensation product thus obtained, 4000 g of diphenyl ether as an inert organic solvent, and 10 mg of zinc chloride are charged for thermal decomposition. Procedures of Example 1 are repeated except that the reaction time is 2 hours and 30 minutes to obtain a polyisocyanate composition. Similarly 4 batches of thermal decomposition reactions are carried out by use of the identical condensations product, and resulting polyisocyanates are all mixed to be raw materials for foaming in a nitrogen stream. The composition of polyisocyanates thus obtained is shown below:

| | Content (%) |
|---|---|
| Binuclear compound (MDI) | 49.8 |
| Trinuclear compound | 19.8 |
| Other polyvalent isocyanates | 30.4 |

An isocyanate content therein is 30.1%. In the formation of a foam by mixing the polyisocayanate composition with polyol, foams with varied densities are prepared by varying the amount of the blowing agent (B) in the same manner as in Example 2. The composition for the formation of foams is shown below:

| | (g) |
|---|---|
| Polyol | 100 |
| Blowing Agent (A) | 2.0 |
| Foam stabilizer | 1.5 |
| Catalyst | 1.5 |
| Polyisocyanate composition obtained | 155.3 |

The amount of the blowing agent (B) is varied to be 25.7 g, 32.2 g, and 38.9 g respectively.

Comparative Example 2

Procedures of Example 4 are repeated except that 153.3 g of commercially available polyisocyanate ("MDI—CR—300" of Mitsui Nisso Corporation) having an isocyanate content of 30.5% and a viscosity of 180 cp (at 25°C) is used, and the amount of the blowing agent (B) is varied as 25.5 g, 31.9 g and 38.6 g respectively to obtain a foam.

The density of the foams obtained in Example 4 and Comparative Example 2 are shown in Table II. Physical properties of the foams thus obtained are shown in Table III.

TABLE II

| Content of the Blowing Agent (B) in the Composition for the formation of foam (%) | | 9 | 11 | 13 |
|---|---|---|---|---|
| Density ($kg/m^3$) | Example 4 | 29.7 | 25.9 | 24.6 |
| | Comparative Example 2 | 29.2 | 26.1 | 24.4 |

TABLE III

| | Example 4 | | | Comparative Example 2 | | |
|---|---|---|---|---|---|---|
| Denisty ($kg/m^3$) / physical properties | 24.6 | 25.9 | 29.7 | 24.4 | 26.1 | 29.2 |
| Compressive strength ($kg/cm^2$) | 1.87 | 2.07 | 2.38 | 1.68 | 1.80 | 2.24 |
| Degree of closed-cell (%) | 86.3 | 86.5 | 87.1 | 83.2 | 85.6 | 86.3 |
| Dimensional stability (%) (−30°C, 72 hrs.) (*) (II) | −2.2 | −1.1 | −0.5 | −9.5 | −1.7 | −1.3 |

Note: The mark (*) shows a case parallel to the direction of expansion.

The amount of isocyanate used differs from each other, but foams with approximately the same densities are obtained, no lowering in the foaming efficiency due to decrease of the isocyanate content is detected.

**Claims**

1. A process for the preparation of a polymethylene polyphenyl polyisocyanate composition comprising polymethylene polyphenyl polyisocyanates, at least a part of the isocyanate groups contained therein being substituted by a carbamate group, whereby the amount of carbamate groups in said composition being up to 10% by mole based on the amount of isocyanate groups in said composition, characterized in that it comprises subjecting a mixture of polymethylene polyphenyl carbamic acid esters

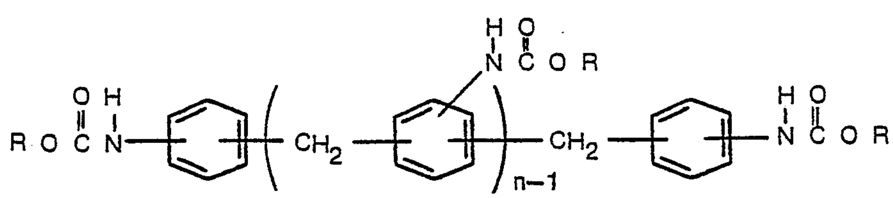

(II)

where R represents a lower alkyl group having 1 to 4 carbon atoms and n represents an integer of one or more, to thermal decomposition reaction to such an extent that up to 10% by weight of alkoxy carbonylamino group remains undecomposed.

2. A process as claimed in claim 1 wherein R in the general formula (II) is methyl or ethyl.

3. A process as claimed in claim 2, wherein polymethylene polyphenyl polycarbamic acid esters are subjected to thermal decomposition reaction at 200°—350°C in an organic solvent having a boiling point of up to 300°C under atmospheric pressure.

4. A process as claimed in claim 3, wherein said organic solvent is diphenyl ether.

5. A process as claimed in claim 3, wherein polymethylene polyphenyl carbamic acid ester is used in an amount in the range of from 1 to 30% by weight based on said organic solvent.

6. A process as claimed in claim 3, wherein zinc compounds are used as a catalyst.

7. A process as claimed in claim 6, wherein said catalyst is zinc chloride.

8. A process as claimed in claim 3, wherein said thermal decomposition reaction is carried out under a violent boiling of said organic solvent.

9. Use of the composition obtained according to one of the claims 1 to 8 for the preparation of foams.

**Revendications**

1. Procédé pour la préparation d'une composition de polyméthylène polyphényl polyisocyanate comprenant des polyméthylène polyphényl polyisocyanates, au moins une partie des groupes isocyanate qui y sont compris étant remplacée par un groupe carbamate, la quantité de groupes carbamate dans ladite composition étant d'au plus 10 moles % par rapport à la quantité des groupes isocyanate dans ladite composition, caractérisé en ce qu'il comprend les étapes consistant à soumettre un mélange d'esters d'acide polyméthylène polyphényl carbamique:

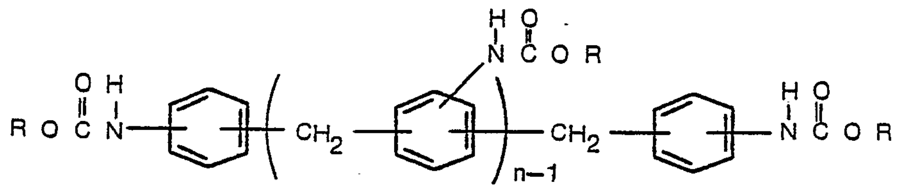
(II)

où R représente un groupe alcoyle inférieur ayant 1 à 4 atomes de carbone et n représente un nombre entier de 1 ou plus, à une réaction de décomposition thermique dans une mesure telle que jusqu'à 10% en poids des groupes alcoxycarbonylamino demeurent non décomposés.

2. Procédé tel que revendiqué dans la revendication 1, où R dans la formule générale (II) est méthyle ou éthyle.

3. Procédé tel que revendiqué dans la revendication 2, où les esters d'acide polyméthylène polyphényl polycarbamique sont soumis à une réaction de décomposition thermique à 200—350°C dans un solvant organique ayant un point d'ébullition d'au plus 300°C sous la pression atmosphérique.

4. Procédé tel que revendiqué dans la revendication 3, où ledit solvant organique est l'éther diphénylique.

5. Procédé tel que revendiqué dans la revendication 3, où l'ester d'acide polyméthylène polyphényl carbamique est employé en une quantité dans la gamme de 1 à 30% en poids par rapport audit solvant organique.

6. Procédé tel que revendiqué dans la revendication 3, où des composés de zinc sont employés comme catalyseur.

7. Procédé tel que revendiqué dans la revendication 6, où ledit catalyseur est le chlorure de zinc.

8. Procédé tel que revendiqué dans la revendication 3, où ladite réaction de décomposition thermique est effectuée sous une ébullition violente dudit solvant organique.

9. Emploi de la composition obtenue selon l'une des revendications 1 à 8 pour la préparation de mousses.

**Patentansprüche**

1. Verfahren zur Herstellung einer Polymethylenpolyphenylpolyisocyanatzusammensetzung, die Polymethylenpolyphenylpolyisocyanate umfaßt, wobei zumindest ein Teil der hierin enthaltenen Isocyanatgruppen durch eine Carbamatgruppe ersetzt ist und wobei die Menge der Carbamatgruppen in der Zusammensetzung bis zu 10 Molprozent, bezogen auf die Menge der Isocyanatgruppen in der Zusammensetzung, beträgt, dadurch gekennzeichnet, daß man eine Mischung von Polymethylenpolyphenylcarbamidsäureestern

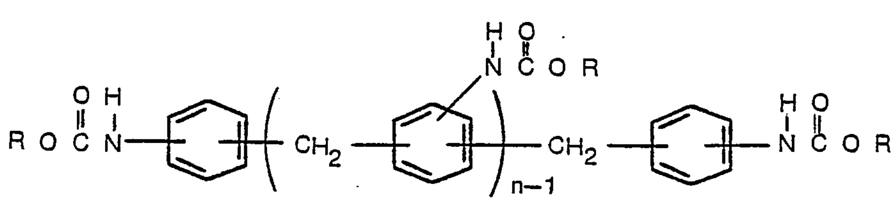
(II)

worin R eine Niedrigalkylgruppe mit 1 bis 4 Kohlenstoffatomen bedeutet und n eine ganze Zahl von 1

oder höher darstellt, in einem derartigen Ausmaß einer thermischen Zersetzungsreaktion unterzieht, daß bis zu 10 Gewichtsprozent der Alkoxycarbonylaminogruppen unzersetzt bleiben.

2. Verfahren gemäß Anspruch 1, dadurch gekennzeichnet, daß R in der allgemeinen Formel (II) Methyl oder Äthyl bedeutet.

3. Verfahren gemäß Anspruch 2, dadurch gekennzeichnet, daß die Polymethylenpolyphenylpolycarbamidsäureester einer thermischen Zersetzungsreaktion bei 200 bis 350°C in einem organischen Lösungsmittel mit einem Siedepunkt von bis zu 300°C unter Atmosphärendruck unterzogen werden.

4. Verfahren gemäß Anspruch 3, dadurch gekennzeichnet, daß das organische Lösungsmittel Diphenyläther ist.

5. Verfahren gemäß Anspruch 3, dadurch gekennzeichnet, daß der Polymethylenpolyphenylcarbamidsäureester in einer Menge im Bereich von 1 bis 30 Gewichtsprozent, bezogen auf das organische Lösungsmittel, verwendet wird.

6. Verfahren gemäß Anspruch 3, dadurch gekennzeichnet, daß man als Katalysator Zinkverbindungen verwendet.

7. Verfahren gemäß Anspruch 6, dadurch gekennzeichnet, daß der Katalysator Zinkchlorid ist.

8. Verfahren gemäß Anspruch 3, dadurch gekennzeichnet, daß die thermische Zersetzungsreaktion unter heftigem Sieden des organischen Lösungsmittels durchgeführt wird.

9. Verwendung der gemäß einem der Ansprüche 1 bis 8 erhaltenen Zusammensetzung für die Herstellung von Schäumen.

F I G. 1

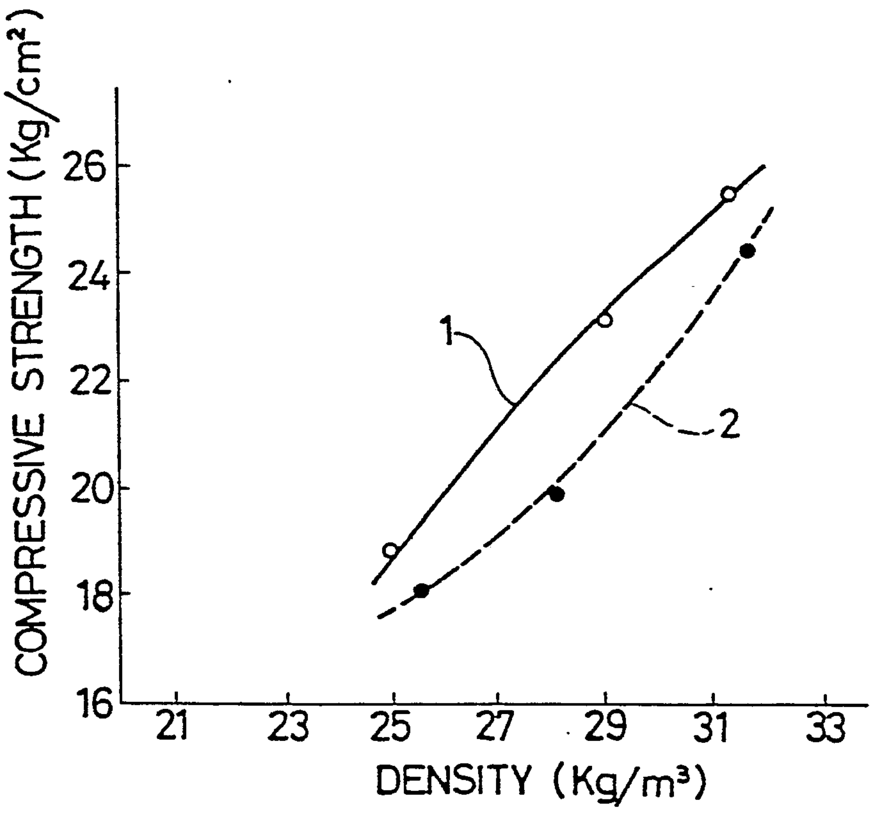
COMPRESSIVE STRENGTH (Kg/cm²)
26
24
22
20
18
16
21
23
25
27
29
31
33
DENSITY (Kg/m³)
1
2

F I G. 2

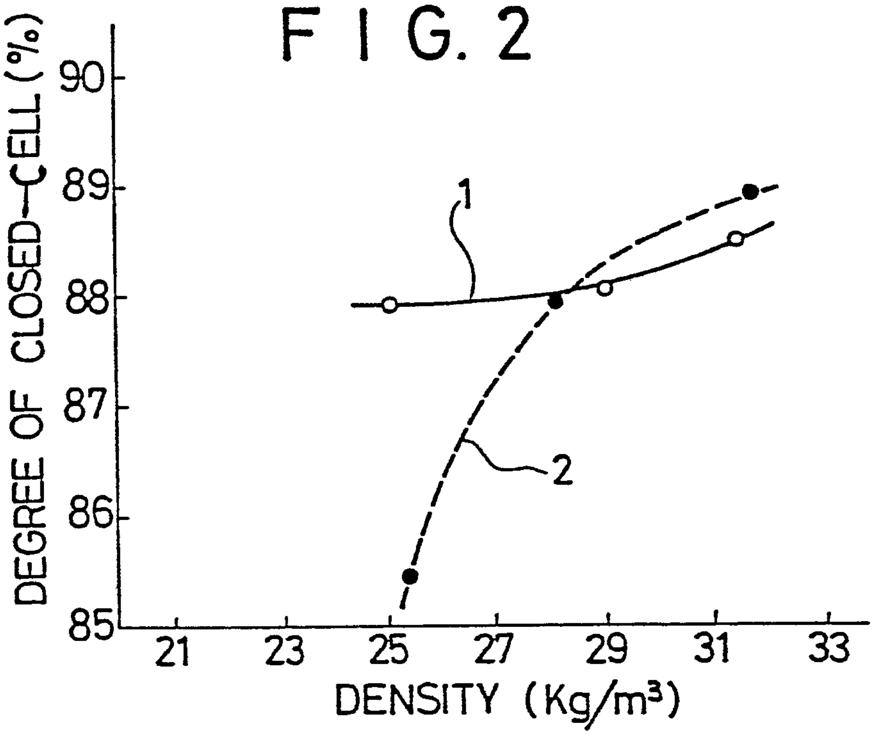
DEGREE OF CLOSED-CELL (%)
90
89
88
87
86
85
1
2
21
23
25
27
29
31
33
DENSITY (Kg/m³)

F I G. 3

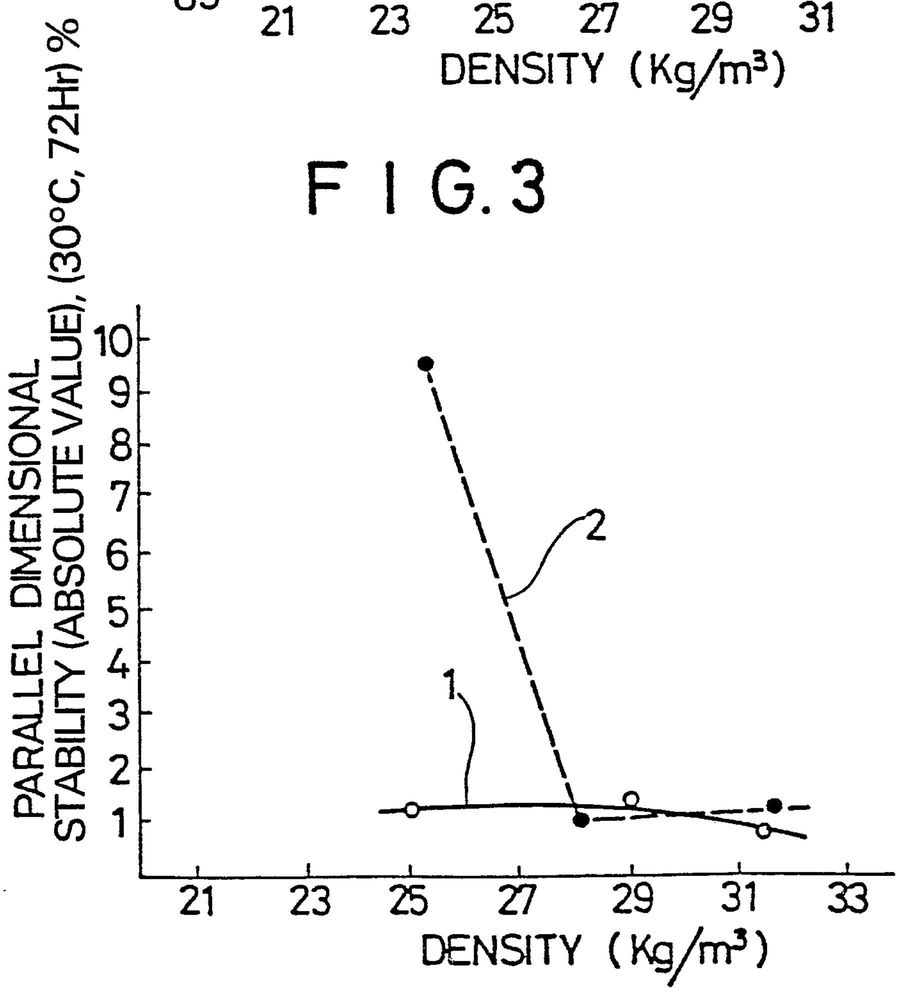
PARALLEL DIMENSIONAL STABILITY (ABSOLUTE VALUE), (30°C, 72Hr) %
10
9
8
7
6
5
4
3
2
1
2
1
21
23
25
27
29
31
33
DENSITY (Kg/m³)